(19) Europäisches Patentamt
European Patent Office
Office européen des brevets

(11) **EP 2 125 449 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
*B60R 25/00* (2013.01)      *G07C 9/00* (2006.01)
*H04B 5/00* (2006.01)

(21) Anmeldenummer: **08708082.6**

(22) Anmeldetag: **22.01.2008**

(86) Internationale Anmeldenummer:
**PCT/EP2008/050717**

(87) Internationale Veröffentlichungsnummer:
**WO 2008/090158 (31.07.2008 Gazette 2008/31)**

(54) **VERFAHREN ZUR ABSTANDSCHARAKTERISIERUNG BEI INDUKTIV GEKOPPELTEN ZUGANGSSYSTEMEN FÜR FAHRZEUGE**

METHOD FOR THE CHARACTERIZATION OF THE DISTANCE IN INDUCTIVELY COUPLED ACCESS SYSTEMS FOR VEHICLES

PROCÉDÉ DE CARACTÉRISATION DE DISTANCE POUR DES SYSTÈMES D'ACCÈS À COUPLAGE INDUCTIF POUR VÉHICULES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.01.2007 DE 102007003495**

(43) Veröffentlichungstag der Anmeldung:
**02.12.2009 Patentblatt 2009/49**

(73) Patentinhaber: **Continental Automotive GmbH 30165 Hannover (DE)**

(72) Erfinder: **FROITZHEIM, Herbert 93186 Pettendorf (DE)**

(56) Entgegenhaltungen:
**EP-A- 0 741 467      EP-A- 1 726 496
DE-A1- 10 032 936      DE-A1- 10 221 427**

**Beschreibung**

Die Erfindung betrifft die Steuerung einer Zugangsanordnung für ein Fahrzeug.

Für moderne Zugangsberechtigungssysteme bzw. Zugangskontrollsysteme werden zunehmend elektronische Sicherungssysteme bzw. Zugangsanordnungen verwendet, bei denen die Authentifizierung eines Zugangsberechtigten mithilfe einer Datenkommunikation zwischen einer meist am Zugangsobjekt angeordneten ersten Kommunikationseinrichtung und einer im Besitz der Zugangsberechtigten zweiten Kommunikationseinrichtung erfolgt. Bezüglich der Sicherungssysteme wird zwischen aktiven und passiven Zugangsanordnungen unterschieden.

Bei einer aktiven Zugangsanordnung wird von der zweiten Kommunikationseinrichtung ein Identifikationskode an die beispielsweise in einem Fahrzeug angeordnete erste Kommunikationseinrichtung übermittelt. Dies kann beispielsweise durch Drücken einer Taste an einem mobilen Identifikationsgeber bewirkt werden. In der zweiten Kommunikationseinrichtung wird der Identifikationskode überprüft, und bei Erfolg kann die Schließvorrichtung der Zugangsanordnung entriegelt oder verriegelt werden. Da der Identifikationsgeber von seinem Besitzer willentlich betätigt werden muss, um z.B. dem Besitzer den Zugang zu seinem Kraftfahrzeug zu ermöglichen, wird dieses elektronische Zugangssystem als aktives Zugangssystem bezeichnet.

Bei einer passiven Zugangsanordnung sendet die erste Kommunikationseinrichtung in regelmäßigen Intervallen oder bei Betätigung einer Einrichtung, wie z.B. dem Ziehen am Türgriff eines Fahrzeugs oder der Betätigung dessen Start-Tasters, Anfragesignale mit einer bestimmten Feldstärke aus. Befindet sich die zweite Kommunikationseinrichtung innerhalb des Wirkungsbereichs der ersten Kommunikationseinrichtung, so kann es deren Anfragesignale empfangen und darauf antworten, um einen Authentifizierungsvorgang bzw. Vor-Authentifizierungsvorgang einzuleiten. Die Authentifizierung erfolgt über einen Austausch von Datentelegrammen, die auch den Authentifizierungskode von der zweiten Kommunikationseinrichtung an die erste Kommunikationseinrichtung übermittelten. Verläuft die Authentifizierung erfolgreich, so wird die mit der Zugangsanordnung gesicherte Schließvorrichtung entriegelt und kann dann automatisch oder manuell geöffnet werden. Da der Identifikationsgeber im vorgestellten Fall nicht willentlich von seinem Besitzer betätigt werden muss, wird dieses elektronische Zugangssystem im Gegensatz zum oben erläuterten als passives Zugangssystem bezeichnet. Passive Zugangssysteme werden auch als schlüssellose Fahrzeugzugangssysteme bezeichnet.

Üblicherweise wird das Anfragesignal im induktiven Frequenzbereich mithilfe eines üblicherweise im kHz-Bereich arbeitenden NF-Senders (Niederfrequenzsender) ausgesandt und von dem NF-Empfänger der zweiten Kommunikationseinrichtung empfangen. Das empfangene Anfragesignal wird dekodiert und zu einem Antwortsignal weiterverarbeitet, das über einen mit geringer Sendeleistung meist im MHz-Bereich betriebenen HF-Sender (Hochfrequenzsender) von der zweiten Kommunikationseinrichtung an die HF-Sende- und Empfangseinrichtung der ersten Kommunikationseinrichtung übertragen wird.

Das Versenden des NF-Anfragesignals wird als Wecken bezeichnet. Das rasch abnehmende magnetische Feld der von der ersten Kommunikationseinrichtung versandten Anfragesignale begrenzt den Wirkungsbereich der Zugangsanordnung auf einen Funktionsradius von typischerweise von weniger als zehn Meter.

Um sicherzustellen, dass nur der sich identifizierende Benutzer Zugang erhält, kann die Entriegelung der Schließvorrichtung abhängig vom Abstand zwischen erster und zweiter Kommunikationseinrichtung gemacht werden. Beispielsweise wird der Wirkungsbereich der Zugangsanordnung in drei Zonen unterteilt: die Erfassungszone, deren äußere Grenze mit der Grenze des Wirkungsbereichs übereinstimmt, der Zugangszone und der Innenraumzone. Gelangt der Benutzer in die Erfassungszone, so empfängt die zweite Kommunikationseinrichtung das Anfragesignal. In der Authentifizierungszone, etwa einen Meter näher an der von der Zugangsanordnung gesicherten Schließvorrichtung, sendet die zweite Kommunikationseinrichtung das Antwortsignal. Betritt der Benutzer schließlich die Zugangszone, das ist im Allgemeinen der Bereich um einen Meter um die Schließvorrichtung, so wird diese entriegelt.

Die Bestimmung des Abstands zwischen erster und zweiter Kommunikationseinrichtung der Zugangsanordnung erfolgt gegenwärtig durch Bestimmen der Feldstärke, mit der das Anfragesignal an der zweiten Kommunikationsvorrichtung empfangen wird. Die Verwendung der Empfangsfeldstärke als Maß für den Abstand zwischen den beiden Kommunikationseinrichtungen setzt jedoch voraus, dass das Anfragesignal mit einer voreingestellten Leistung bzw. Feldstärke ausgesandt wird. Hierzu wird entweder der Speisestrom oder die Speisespannung der Antenne der ersten Kommunikationseinrichtung auf einen vorgegebenen Wert eingestellt. Die Einstellung der Sendefeldstärke erfolgt entweder teils durch geregelte teils durch gesteuerte Stellelemente oder ist über das Design der Einrichtung fest vorgegeben. Es wird darauf hingewiesen, dass in dieser Schrift abweichend vom deutschen Sprachgebrauch nicht zwischen den Begriffen Steuern und Regeln unterschieden wird. Vielmehr werden beide Begriffe synonym verwendet, d.h. der Begriff Steuern kann ebenso eine Rückführung einer Regelgröße bzw. deren Messwerts umfassen, wie sich der Begriff Regeln auf eine einfache Steuerkette beziehen kann. Dies betrifft auch grammatikalische Abwandlungen dieser Begriffe. Die Verlustleistung der Stellelemente erhöht die Energieaufnahme der ersten Kommunikationseinrichtung jedoch in beträchtlichem Umfang.

Die Offenlegungsschrift DE 100 32 936 Al offenbart ein System, bei dem die Basisstation eines Fahrzeugs nacheinander über zumindest zwei Antennen jeweils ein Signal mit einer bekannten Sendeleistung abstrahlt. Jedes der Signale enthält eine Kennung, die anzeigt, über welche der Antennen des Fahrzeugs das jeweilige Signal abgestrahlt wurde. Die Signale werden am so genannten Codegeber empfangen, wobei gleichzeitig ihre jeweiligen Empfangsfeldstärken gemessen werden. Die Informationen über die Empfangsfeldstärken werden zusammen mit der das jeweilige Signal identifizierenden Kennung an die Basisstation übertragen. Diese Informationen werden von der Basisstation empfangen und dort zur Ermittlung eines Abstands zwischen dem Codegeber und der jeweiligen Antenne des Fahrzeugs ausgewertet. Da die Sendeleistung der Basisstation einen bekannten Wert einhalten muss, weist dieses System ebenfalls die oben beschriebenen Nachteile auf.

Ausgehend hiervon liegt der Erfindung die Aufgabe zugrunde, eine Zugangsanordnung anzugeben, die eine zuverlässige Charakterisierung des Abstands zwischen erster und zweiter Kommunikationseinrichtung bei verringerter Energieaufnahme ermöglicht.

Die Aufgabe wird gemäß den unabhängigen Ansprüchen der Erfindung gelöst.

Die Erfindung umfasst eine Zugangsanordnung für ein Fahrzeug mit einer ersten Sende- und Empfangseinrichtung zum Senden eines ersten Funksignals und zum Empfangen eines zweiten Funksignals, einer zweiten Sende- und Empfangseinrichtung zum Senden des zweiten Funksignals und zum Empfangen des ersten Funksignals, einer Sendestärke-Bestimmungseinrichtung zum Bestimmen eines Sendestärkewerts, der die aktuelle Sendefeldstärke des von der ersten Sende- und Empfangseinrichtung gesendeten ersten Funksignals repräsentiert, und einer Empfangsstärke-Bestimmungseinrichtung zum Bestimmen eines Empfangsstärkewerts, der die Empfangsfeldstärke des ersten Funksignals am Ort der zweiten Sende- und Empfangseinrichtung repräsentiert. Der Informationsgehalt des ersten Funksignals der Zugangsanordnung ist dabei so ausgebildet, dass er den Sendestärkewert umfasst, und die Zugangsanordnung weist ferner eine Relationsbestimmungseinrichtung zum Bestimmen einer Relation zwischen dem Sendestärkewert und dem Empfangsstärkewert auf.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z.B. Verfahrensschritten, Einrichtungen, Bereichen, Größen und dergleichen aufzufassen ist, die in keiner Weise das Vorhandensein anderer oder zusätzlicher Merkmale oder Gruppierungen von anderen oder zusätzlichen Merkmalen ausschließt.

Die Erfindung umfasst ferner ein Verfahren zur Bestimmung eines den Abstand zwischen einer ersten Sende- und Empfangseinrichtung und einer zweiten Sende- und Empfangseinrichtung einer Zugangsanordnung für ein Fahrzeug kennzeichnenden Distanzwerts mit Schritten zum Bestimmen eines mit der aktuellen Sendefeldstärke der ersten Sende- und Empfangseinrichtung korrelierten Sendestärkewerts, zum Senden eines ersten Funksignals mithilfe der ersten Sende- und Empfangseinrichtung, wobei der Informationsgehalt des ersten Funksignals den Sendestärkewert umfasst, zum Empfangen des ersten Funksignals mithilfe der zweiten Sende- und Empfangseinrichtung, zum Bestimmen eines mit der Empfangsfeldstärke des an der zweiten Sende- und Empfangseinrichtung empfangenen ersten Funksignals korrelierten Empfangsstärkewerts, zum Bestimmen der Relation von Empfangsstärkewert und Sendestärkewert und zum Bilden des Distanzwerts auf der Grundlage der bestimmten Relation von Empfangsstärkewert und Sendestärkewert.

Die Erfindung ermöglicht eine Bestimmung einer den Abstand zwischen der ersten Kommunikationseinrichtung und der zweiten Kommunikationseinrichtung charakterisierenden Größe, ohne dass eine Regelung oder Steuerung der Sendefeldstärke des von der ersten Kommunikationseinrichtung ausgestrahlten Signals erforderlich wäre. Dadurch gestaltet sich die erste Kommunikationseinrichtung einfacher und robuster und weist eine geringere Verlustleistung auf.

Die Erfindung wird in ihren abhängigen Ansprüchen weitergebildet.

Im einfachsten Fall umfasst der Informationsgehalt des zweiten Funksignals den Empfangsstärkewert, sodass die Relationsbestimmungseinrichtung am Ort der ersten Sende- und Empfangseinrichtung angeordnet werden kann.

Zur Übermittlung einer den Abstand zwischen der ersten Sende- und Empfangseinrichtung und der zweiten Sende- und Empfangseinrichtung charakterisierenden Größe umfasst der Informationsgehalt des zweiten Funksignals vorzugsweise die Relation zwischen dem Sendestärkewert und dem Empfangsstärkewert. Damit kann die Zugangskontrolle von der die erste Sende- und Empfangseinrichtung aufnehmenden Einrichtung vorgenommen werden.

Damit beispielsweise bestimmte Funktionen der Zugangsanordnung in Abhängigkeit zwischen der ersten und der zweiten Sende- und Empfangseinheit ausgelöst werden können, weist die Zugangsanordnung vorzugsweise eine Abstandsermittlungseinrichtung auf, die zum Ermitteln eines Abstandswerts ausgebildet ist, der einen Abstand zwischen der ersten Sende- und Empfangseinrichtung und der zweiten ersten Sende- und Empfangseinrichtung auf der Grundlage der der von der Relationsbestimmungseinrichtung bestimmten Relation zwischen Sendestärkewert und Empfangsstärkewert kennzeichnet.

Um eine Zugangsanordnung mit einer Benutzeridentifikation zu realisieren, bilden die zweite Sende- und Empfangseinrichtung und die Relationsbestimmungseinrichtung zweckmäßig einen Bestandteil einer mobilen Vorrichtung, die von einem jeweilig zu identifizierenden Benutzer mit sich geführt werden kann. Als Alternative hierzu können die Relationsbestimmungseinrichtung und die erste Sende- und Empfangseinrichtung zusammen angeordnet werden, sodass beide einen Bestandteil einer sie umfassenden Vorrichtung bilden. Um eine Verzögerung der Abstandsermittlung durch Aufteilung der dazu erforderlichen Bestimmungen auf räumlich getrennte Komponenten der Zugangsanordnung zu vermeiden, bilden die zweite Sende- und Empfangseinrichtung, die Relationsbestimmungseinrichtung und die Abstandsermittlungseinrichtung einen Bestandteil einer diese Einrichtungen umfassenden mobilen Vorrichtung. In diesem Fall umfasst der Informationsgehalt des zweiten Funksignals auch den so ermittelten Abstandswert.

Ein mit dem Abstand zwischen erster und zweiter Sende- und Empfangseinrichtung korrelierter Abstandswert wird auf einfache Weise über einen Distanzwert erhalten, der proportional zum Quotienten aus Empfangsstärkewert und Sendestärkewert gebildet wird.

Ein linear mit der Entfernung zwischen beiden Kommunikationseinrichtungen verlaufender Abstandswert kann über einen Distanzwert erhalten werden, der einen zum Abstand zwischen erster Sende- und Empfangseinrichtung und zweiter Sende- und Empfangseinrichtung proportionalen Wert einnimmt.

Sollen nur bestimmte Abstandszonen erfasst werden, so kann der Abstandswert von einem Distanzwert gebildet werden, der einen den Abstand erster Sende- und Empfangseinrichtung und zweiter Sende- und Empfangseinrichtung klassifizierenden Wert einnimmt.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen

Figur 1     eine schematische Darstellung einer Zugangsanordnung mit einer Bestimmung der Empfangsfeldstärke relativ zur Sendefeldstärke zeigt und

Figur 2     in einem Flussdiagramm die wesentlichen Schritte des von der Zugangsanordnung nach Figur 1 ausgeführten Verfahrens zur Bestimmung eines Abstands zwischen den beiden Kommunikationseinrichtungen der Zugangsanordnung veranschaulicht.

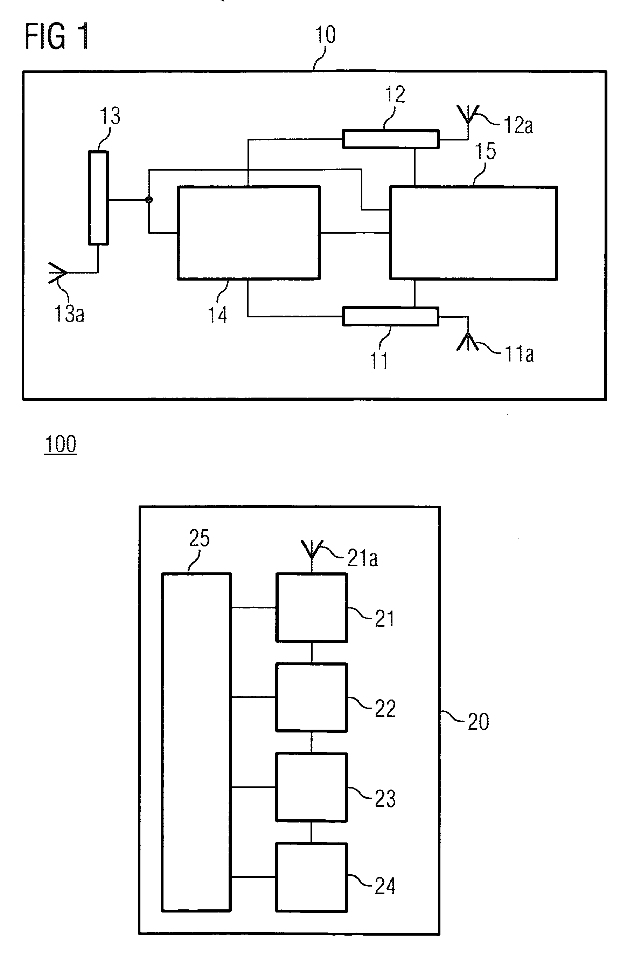

Das Blockdiagramm der Figur 1 zeigt die wesentlichen Komponenten einer Zugangsvorrichtung 100 mit einer, auf einer Relation zwischen Sende- und Empfangsfeldstärke eines Signals gründenden Abstandsermittlung. Die Zugangsvorrichtung weist eine erste Kommunikationseinrichtung 10 und eine zweite Kommunikationseinrichtung 20 auf. Die gezeigte Zugangsvorrichtung wird vorzugsweise in einem Zugangskontrollsystem eines Kraftfahrzeugs verwendet, kann aber auch bei beliebigen anderen Zugangskontrollsystemen, beispielsweise innerhalb von Gebäuden eingesetzt werden.

Die erste Kommunikationseinrichtung 10 weist eine erste Sende- und Empfangseinrichtung auf, die in der in Figur 1 dargestellten Ausführungsform die drei Einheiten 11, 12 und 13 mit den zugehörigen Antennen 11a, 12a bzw. 13a umfasst. Jede dieser Sende- und Empfangseinheiten 11, 12 und 13 ist mithilfe der ihr zugeordneten Antenne 11a, 12a oder 13a zum Senden und Empfangen von Signale ausgebildet. Die Übertragung der Signale kann auf mehreren Frequenzen erfolgen. Beispielsweise kann das oben erwähnte Anfragesignal im induktiven kHz-Bereich gesendet werden, während andere Signale des Datenaustausches zwischen den beiden Kommunikationseinrichtungen 10 und 20 im MHz-Bereich übertragen werden können.

Die Ausbildung der ersten Sende- und Empfangseinrichtung mit mehreren Sende- und Empfangseinheiten 11, 12 und 13 ermöglicht es den Zugang zu mehreren Schließvorrichtungen einer Einrichtung, z.B. den Schlössern von Fahrertüre, Beifahrertüre und Heckklappe eines Kraftfahrzeugs, unabhängig voneinander zu steuern. Im einfachsten Fall, beispielsweise bei einer Zentralverriegelung eines Fahrzeugs, weist die erste Sende- und Empfangseinrichtung nur eine Sende- und Empfangseinheit 11, 12 oder 13 auf. Werden jedoch mehrere Sende- und Empfangseinheiten 11, 12 und 13 verwendet, so senden diese das Anfragesignal vorzugsweise zueinander zeitlich versetzt aus.

Die Sendefeldstärke des ausgesandten Funksignals, beispielsweise des Anfragesignals, wird von der Sendestärke-Bestimmungseinrichtung 14 bestimmt. Die Bestimmung erfolgt vorzugsweise nicht als Messung der tatsächlichen Feldstärke mit der an der jeweiligen Antenne 11a, 12a oder 13a das Funksignal ausgesandt wird, sondern anhand eines einfach zu ermittelnden Werts, der direkt mit der Sendefeldstärke verknüpft ist. Dieser Wert wird im Folgenden als Sendestärkewert bezeichnet. Vorzugsweise steht der Sendestärkewert in direktem Verhältnis zur Signalstärke, d.h. zur Signalspannung oder zum Signalstrom am Speisepunkt der gerade verwendeten Antenne 11a, 12a oder 13a oder an einem sinnfälligen Punkt der die jeweilige Antenne speisenden Sendeeinheit 11, 12, oder 13.

Die Steuerungseinrichtung 15 ist zur Steuerung des Datenaustausches über die erste Sende- und Empfangseinrichtung ausgebildet. Insbesondere steuert sie das regelmäßige Aussenden des Abfragesignals, prüft das von der zweiten Sende- und Empfangseinrichtung übermittelte Antwortsignal und ermittelt auf der Grundlage der mit der zweiten Kommunikationseinrichtung ausgetauschten Datentelegramme die Zugangsberechtigung.

Um eine Ermittlung eines den Abstand zwischen der ersten und der zweiten Kommunikationseinrichtung charakterisierenden Werts zu ermöglichen, sendet die Steuerungseinrichtung 15 den Sendestärkewert über die erste Sende- und Empfangseinrichtung an die zweite Kommunikationseinrichtung. Der Sendestärkewert kann bereits im Anfragesignal enthalten sein, damit die Steuereinrichtung 15 den Abstandswert für die Distanz zwischen den beiden Kommunikationseinrichtungen bereits anhand des von der zweiten Kommunikationseinrichtung zurückgesandten Antwortsignals feststellen kann.

Ergeben die Identifikation der zweiten Kommunikationseinrichtung zusammen mit dem Abstandswert und eventuell weiteren Kennwerten eine Zugangsberechtigung, so steuert die Steuerungseinrichtung 15 die (in der Figur 1 nicht gezeigten) Schließvorrichtung(en) so an, dass diese entsprechend den Vorgaben oder weiteren Anweisungen ent- oder verriegelt werden können. Die Steuerungseinrichtung 15 kann die Steuerung der Schließvorrichtungen dabei direkt vornehmen, sie kann aber auch über eine Schnittstelle entsprechende Steuersignale an eine außerhalb der Zugangsanordnung 100 angeordnete weitere Steuereinrichtung, z.B. an die zentrale Steuereinrichtung eines Kraftfahrzeugs, übertragen.

Die zweite Kommunikationseinrichtung 20 ist günstigerweise innerhalb einer mobilen Einrichtung mit kleinen Abmessungen angeordnet, die von einem Benutzer zum Ausweis seiner Identifikation ohne größere Umstände bei sich getragen werden kann. Die zweite Kommunikationseinrichtung 20 umfasst eine zweite Sende- und Empfangseinrichtung 21 mit einer Antenne 21a, eine Empfangsstärke-Bestimmungseinrichtung 22, eine Relationsbestimmungseinrichtung 23, eine Abstandsermittlungseinrichtung 24 und eine Steuereinrichtung 25.

Die zweite Sende- und Empfangseinrichtung 21 ist zum Senden und Empfangen von Signalen über die Antenne 21a ausgebildet. Vorzugsweise erfolgt der Empfang des Anfragesignals über eine NF-Einheit im kHz-Bereich, während der weitere Austausch von Datentelegrammen über eine HF-Einheit im MHz-Bereich vorgenommen wird.

Die zweite Sende- und Empfangseinrichtung 21 ist mit einer Empfangsstärke-Bestimmungseinrichtung 22 verbunden, die die Empfangsfeldstärke des jeweils von der ersten Kommunikationseinrichtung ausgesandten Funksignals bestimmt. Wie bei der Bestimmung der Sendefeldstärke erfolgt auch hier die Bestimmung vorzugsweise nicht als Messung der tatsächlichen Feldstärke an der Antenne 21a, sondern wiederum anhand eines einfach zu ermittelnden Werts, der direkt mit der Empfangsfeldstärke verknüpft ist. Dieser Wert wird im Folgenden als Empfangsstärkewert bezeichnet. Vorzugsweise steht der Empfangsstärkewert in direktem Verhältnis zur Stärke des empfangenen Funksignals, d.h. zur Signalspannung oder zum Signalstrom am Speisepunkt der Antenne 21a oder an einem sinnfälligen Punkt der das Antennensignal weiterverarbeitenden Empfangseinheit 21.

Der in einem von der ersten Kommunikationseinrichtung 10 empfangenen Signal enthaltene Sendestärkewert wird (entweder direkt oder vermittelt über die Steuereinrichtung 25) an die Relationsbestimmungseinrichtung 23 weitergeleitet. Die Relationsbestimmungseinrichtung 23 ist zur Bestimmung der Relation zwischen dem Empfangsstärkewert und dem Sendestärkewert ausgebildet. Vorzugsweise wird die Relation in Form eines Quotienten der beiden Werte gebildet. Es sind aber auch andere Relationen möglich, beispielsweise eine auf den Sendestärkewert normierte Differenz von Sendestärkewert und Empfangsstärkewert, die sich in der Form darstellen lässt:

$$\mathrm{Relation} = \frac{\mathrm{Sendestärkewert - Empfangsstärkewert}}{\mathrm{Sendestärkewert}} \qquad (1)$$

Abweichend von der in Figur 1 gezeigten Ausführungsform kann die Relationseinrichtung 23 auch in der ersten Kommunikationseinrichtung 10, beispielsweise innerhalb der Steuereinrichtung 15 angeordnet sein. In diesem Fall überträgt die zweite Kommunikationseinrichtung 20 den von der Empfangsstärke-Bestimmungseinrichtung 22 bestimmten Empfangsstärkewert an die erste Kommunikationseinrichtung 10 zur weiteren Verarbeitung. Zur Vermeidung weiterer, ausschließlich der Abstandswertermittlung dienender Datenübertragungen ist in diesem Fall auch die nachfolgend beschriebene Abstandsermittlungseinrichtung 24 bevorzugt innerhalb der ersten Kommunikationseinrichtung 10 ausgebildet.

Die Abstandsermittlungseinrichtung 24 dient der Ermittlung eines Abstandswerts, der für eine zwischen der ersten Sende- und Empfangseinheit und der zweiten Sende- und Empfangseinheit gegebene Distanz kennzeichnend ist. Der Abstandswert kann z.B. durch Gewichtung der zuvor bestimmten Relation von Sendestärkewert und Empfangsstärkewert gebildet werden. In einigen Fällen ist jedoch nicht der genaue Abstand von Interesse, sondern eine gewisse Klassifizierung des Abstands, die erkennen lässt, welche Abstandssituation gegenwärtig gegeben ist; beispielsweise ob sich die erste Kommunikationseinrichtung in der Erfassungs-, Authentifizierungs- oder Zugangszone befindet. Hierzu kann die zuvor bestimmte Relation mit vorgegebenen Schwellwerten verglichen werden und ein die Lage der Relation zu den Schwellwerten charakterisierender Wert als Abstandswert festgelegt werden; z.B. 0, 1 oder 2 bzw. e, a, z oder dergleichen für Erfassungs-, Authentifizierungs- oder Zugangszone. Die Schwellwerte müssen im vorgenannten Beispiel keine festen Werte sein, sondern können mit dem aktuellen Sendefeldstärkewert normiert werden.

Die Ablaufsteuerung der Abstandswertermittlung und die Steuerung des Datendialogs mit der ersten Kommunikationseinrichtung werden über die dazu ausgebildete Steuerungseinrichtung 25 abgewickelt. Sofern Relationseinrichtung 23 und/oder Abstandsermittlungseinrichtung 24 in der ersten Kommunikationseinrichtung 10 angeordnet sind, teilt sich die Abwicklung der Abstandswertermittlung auf beide Steuerungseinrichtungen 25 und 15 auf. Wird der Abstandswert in der zweiten Kommunikationseinrichtung 20 ermittelt, so steuert die Steuerungseinrichtung 25 die zweite Sende- und Empfangseinrichtung zur Übertragung eines den Abstandswert enthaltenden Funksignals.

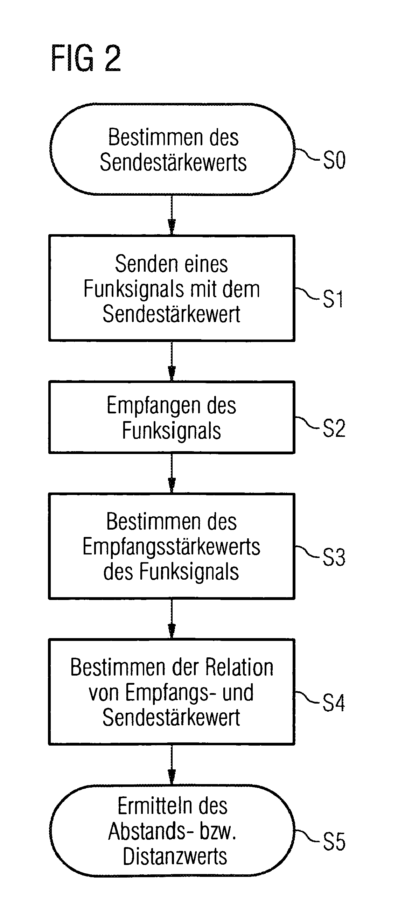

Das Flussdiagramm der Figur 2 zeigt die wesentlichen Verfahrensschritte zur Bestimmung eines, den Abstand zwischen der ersten Sende- und Empfangseinrichtung und der zweiten Sende- und Empfangseinrichtung kennzeichnenden, Abstands- bzw. Distanzwerts. Das Verfahren beginnt in Schritt S0 mit dem Bestimmen eines Sendestärkewerts, der in der oben beschriebenen Weise mit der aktuellen Sendefeldstärke der ersten Sende- und Empfangseinrichtung korreliert ist. In Schritt S1 wird mithilfe der ersten Sende- und Empfangseinrichtung an die zweite Sende- und Empfangseinrichtung 21 der zweiten Kommunikationseinrichtung ein Funksignal übertragen, dessen Informationsgehalt den Sendestärkewert enthält. Dieses Funksignal wird von der zweiten Sende- und Empfangseinrichtung 21 in Schritt S2 empfangen, woraufhin über die Empfangsstärke-Bestimmungseinrichtung 22 in Schritt S3 der Empfangsstärkewert bestimmt wird, der wie oben beschrieben mit der Empfangsfeldstärke des Funksignals an der zweiten Sende- und Empfangseinrichtung 21 korreliert ist. In Schritt S4 bestimmt die Relationsbestimmungseinrichtung 23 die Relation zwischen Sende- und Empfangsstärkewert nach einer der oben erwähnten Weisen, bevor schließlich in Schritt S5 der Abstands- bzw. Distanzwert von der Abstandsermittlungseinrichtung 24 auf der Grundlage der so bestimmten Relation ermittelt wird.

Der Distanzwert kann über eine Gewichtung der Relation gebildet werden, sodass der Abstandswert stets proportional zur Relation verläuft, die im einfachsten Fall aus dem Quotienten von Empfangsstärkewert und Sendestärkewert gebildet wird. In anderen Ausführungen der Zugangsanordnung 100 wird die nichtlineare Abnahme der Funksignalstärke mit der Entfernung von der ersten Kommunikationseinrichtung bei der Distanz- bzw. Abstandswertermittlung so berücksichtigt, dass ein proportional zu einem Abstand zwischen erster und zweiter Sende- und Empfangseinrichtung verlaufender Abstands- bzw. Distanzwert erreicht werden kann. Statt kontinuierlich mit der Relation verknüpfter Werte, kann der Abstands- bzw. Distanzwert auch wie oben beschrieben diskrete Werte annehmen, die den jeweiligen Abstand zwischen erster und zweiter Kommunikations- bzw. Sende- und Empfangseinrichtung klassifizieren.

Bezugszeichenliste

| | |
|---|---|
| 10 | erste Kommunikationseinrichtung |
| 11 | erste Einheit der ersten Sende- und Empfangseinrichtung |
| 11a | Antenne der ersten Einheit der ersten Sende- und Empfangseinrichtung, |
| 12 | zweite Einheit der ersten Sende- und Empfangseinrichtung |
| 12a | Antenne der zweiten Einheit der ersten Sende- und Empfangseinrichtung |
| 13 | dritte Einheit der ersten Sende- und Empfangseinrichtung |
| 13a | Antenne der dritten Einheit der ersten Sende- und Empfangseinrichtung |
| 14 | Sendestärke-Bestimmungseinrichtung |
| 15 | Steuerungseinrichtung der ersten Kommunikationseinrichtung |
| 20 | zweite Kommunikationseinrichtung |
| 21 | zweite Sende- und Empfangseinrichtung |
| 21a | Antenne der zweiten Sende- und Empfangseinrichtung |
| 22 | Empfangsstärke-Bestimmungseinrichtung |
| 23 | Relationsbestimmungseinrichtung |
| 24 | Abstandsermittlungseinrichtung |
| 25 | Steuerungseinrichtung der zweiten Kommunikationseinrichtung |
| 100 | Zugangsanordnung |

**Patentansprüche**

1. Zugangsanordnung für ein Fahrzeug mit

   - einer ersten Sende- und Empfangseinrichtung (11, 11a, 12, 12a, 13, 13a) zum Senden eines ersten Funksignals und zum Empfangen eines zweiten Funksignals,
   - einer zweiten Sende- und Empfangseinrichtung (21, 21a) zum Senden des zweiten Funksignals und zum Empfangen des ersten Funksignals, und
   - einer Empfangsstärke-Bestimmungseinrichtung (22) zum Bestimmen eines Empfangsstärkewerts, der die Empfangsfeldstärke des ersten Funksignals am Ort der zweiten Sende- und Empfangseinrichtung repräsentiert,

**dadurch gekennzeichnet, dass** die Zugangsanordnung des Weiteren umfasst eine Sendestärke-Bestimmungseinrichtung (14) zum Bestimmen eines Sendestärkewerts, der die aktuelle Sendefeldstärke des von der ersten Sende- und Empfangseinrichtung gesendeten ersten Funksignals repräsentiert,
dass der Informationsgehalt des ersten Funksignals den Sendestärkewert umfasst und die Zugangsanordnung eine Relationsbestimmungseinrichtung (23) zum Bestimmen einer Relation zwischen dem Sendestärkewert und dem Empfangsstärkewert aufweist.

2. Zugangsanordnung nach Anspruch 1,
**dadurch gekennzeichnet,**
**dass** der Informationsgehalt des zweiten Funksignals den Empfangsstärkewert umfasst.

3. Zugangsanordnung nach Anspruch 1 oder 2,
**dadurch gekennzeichnet,**
**dass** der Informationsgehalt des zweiten Funksignals die Relation zwischen dem Sendestärkewert und dem Empfangsstärkewert umfasst.

4. Zugangsvorrichtung nach einem der Ansprüche 1, 2 oder 3,
**gekennzeichnet durch**,
eine Abstandsermittlungseinrichtung (24), die zum Ermitteln eines Abstandswerts ausgebildet ist, der einen Abstand zwischen der ersten Sende- und Empfangseinrichtung (11, 11a, 12, 12a, 13, 13a) und der zweiten ersten Sende- und Empfangseinrichtung (21, 21a) auf der Grundlage der von der Relationsbestimmungseinrichtung (23) bestimmten Relation zwischen Sendestärkewert und Empfangsstärkewert kennzeichnet.

5. Zugangsvorrichtung nach einem der vorangehenden Ansprüche,
**dadurch gekennzeichnet,**
**dass** die zweite Sende- und Empfangseinrichtung (21, 21a) und die Relationsbestimmungseinrichtung (23) einen Bestandteil einer mobilen Vorrichtung (20) bilden.

6. Zugangsvorrichtung nach Anspruch 1 oder 2,
**dadurch gekennzeichnet,**
**dass** die erste Sende- und Empfangseinrichtung (11, 11a, 12, 12a, 13, 13a) und die Relationsbestimmungseinrichtung (23) einen Bestandteil einer Vorrichtung (10) bilden.

7. Zugangsvorrichtung nach Anspruch 5,
**dadurch gekennzeichnet,**
**dass** die zweite Sende- und Empfangseinrichtung (21, 21a), die Relationsbestimmungseinrichtung (23) und die Abstandsermittlungseinrichtung (24) einen Bestandteil einer diese Einrichtungen umfassenden mobilen Vorrichtung (20) bilden.

8. Zugangsvorrichtung nach Anspruch 7,
**dadurch gekennzeichnet,**
**dass** der Informationsgehalt des zweiten Funksignals den Abstandswert umfasst.

9. Verfahren zur Bestimmung eines den Abstand zwischen einer ersten Sende- und Empfangseinrichtung (11, 11a, 12, 12a, 13, 13a) und einer zweiten Sende- und Empfangseinrichtung (21, 21a) einer Zugangsanordnung für ein Fahrzeug kennzeichnenden Distanzwerts mit folgenden Schritten:

- Bestimmen eines mit der aktuellen Sendefeldstärke der ersten Sende- und Empfangseinrichtung korrelierten Sendestärkewerts (S0),
- Senden eines ersten Funksignals (S1) mithilfe der ersten Sende- und Empfangseinrichtung, wobei der Informationsgehalt des ersten Funksignals den Sendestärkewert umfasst,
- Empfangen des ersten Funksignals (S2) mithilfe der zweiten Sende- und Empfangseinrichtung,
- Bestimmen eines mit der Empfangsfeldstärke (S3) des an der zweiten Sende- und Empfangseinrichtung empfangenen ersten Funksignals korrelierten Empfangsstärkewerts,
- Bestimmen der Relation von Empfangsstärkewert und Sendestärkewert (S4) und
- Bilden des Distanzwerts (S5) auf der Grundlage der bestimmten Relation von Empfangsstärkewert und Sendestärkewert.

**10.** Verfahren nach Anspruch 9,
**dadurch gekennzeichnet,**
**dass** der Distanzwert proportional zum Quotienten aus Empfangsstärkewert und Sendestärkewert gebildet wird.

**11.** Verfahren nach Anspruch 9,
**dadurch gekennzeichnet,**
**dass** der Distanzwert einen zum Abstand zwischen erster Sende- und Empfangseinrichtung (11, 11a, 12, 12a, 13, 13a) und zweiter Sende- und Empfangseinrichtung (21, 21a) proportionalen Wert einnimmt.

**12.** Verfahren nach Anspruch 9,
**dadurch gekennzeichnet,**
**dass** der Distanzwert einen den Abstand erster Sende- und Empfangseinrichtung (11, 11a, 12, 12a, 13, 13a) und zweiter Sende- und Empfangseinrichtung (21, 21a) klassifizierenden Wert einnimmt .

**Claims**

**1.** Access facility for a vehicle, having

- a first transmit/receive device (11, 11a, 12, 12a, 13, 13a) for transmitting a first radio signal and receiving a second radio signal,
- a second transmit/receive device (21, 21a) for transmitting the second radio signal and receiving the first radio signal, and
- a reception strength determining device (22) for determining a reception strength value, which represents the reception field strength of the first radio signal at the location of the second transmit/receive device.

**characterised in that**
the access facility further includes a transmission strength determining device (14) for determining a transmission strength value, which represents the current transmission field strength of the first radio signal transmitted by the first transmit/receive device, and that the information content of the first radio signal comprises the transmission strength value, and the access facility features a relation determining device (23) for determining a relation between the transmission strength value and the reception strength value.

**2.** Access facility according to claim 1,
**characterised in that**
the information content of the second radio signal comprises the reception strength value.

**3.** Access facility according to claim 1 or 2,
**characterised in that**
the information content of the second radio signal comprises the relation between the transmission strength value and the reception strength value.

**4.** Access facility according to one of the claims 1, 2 or 3,
**characterised by**
a gap calculating device (24) which is designed to calculate a gap value that characterises a gap between the first transmit/receive device (11, 11a, 12, 12a, 13, 13a) and the second first transmit/receive device (21, 21a) on the basis of the relation between transmission strength value and reception strength value, said relation being determined by the relation determining device (23).

**5.** Access facility according to one of the preceding claims,
**characterised in that**
the second transmit/receive device (21, 21a) and the relation determining device (23) form integral parts of a mobile apparatus (20).

**6.** Access facility according to claim 1 or 2,
**characterised in that**

the first transmit/receive device (11, 11a, 12, 12a, 13, 13a) and the relation determining device (23) form integral parts of an apparatus (10).

7. Access facility according to claim 5,
   **characterised in that**
   the second transmit/receive device (21, 21a), the relation determining device (23) and the gap calculating device (24) form integral parts of a mobile apparatus (20) comprising these devices.

8. Access facility according to claim 7,
   **characterised in that**
   the information content of the second radio signal comprises the gap value.

9. Method for determining a distance value which characterises the gap between a first transmit/receive device (11, 11a, 12, 12a, 13, 13a) and a second transmit/receive device (21, 21a) of an access facility for a vehicle, having the following steps:

   - determining a transmission strength value (S0) which is correlated to the current transmission field strength of the first transmit/receive device,
   - transmitting a first radio signal (S1) with the aid of the first transmit/receive device, wherein the information content of the first radio signal comprises the transmission strength value,
   - receiving the first radio signal (S2) with the aid of the second transmit/receive device,
   - determining a reception strength value which is correlated to the reception field strength (S3) of the first radio signal that is received at the second transmit/receive device,
   - determining the relation between reception strength value and transmission strength value (S4), and
   - forming the distance value (S5) on the basis of the determined relation between reception strength value and transmission strength value.

10. Method according to claim 9,
    **characterised in that**
    the distance value is generated proportionally in relation to the quotient of reception strength value and transmission strength value.

11. Method according to claim 9,
    **characterised in that**
    the distance value assumes a value that is proportional to the gap between first transmit/receive device (11, 11a, 12, 12a, 13, 13a) and second transmit/receive device (21, 21a).

12. Method according to claim 9,
    **characterised in that**
    the distance value assumes a value that classifies the gap between first transmit/receive device (11, 11a, 12, 12a, 13, 13a) and second transmit/receive device (21, 21a).

**Revendications**

1. Agencement d'accès pour un véhicule avec

   - un premier dispositif d'émission et de réception (11, 11a, 12, 12a, 13, 13a) pour l'émission d'un premier signal radio et pour la réception d'un deuxième signal radio,
   - un deuxième dispositif d'émission et de réception (21, 21a) pour l'émission du deuxième signal radio et pour la réception du premier signal radio, et
   - un dispositif de détermination de l'intensité de réception (22) pour la détermination d'une valeur de l'intensité de réception qui représente l'intensité du champ de réception du premier signal radio à l'endroit du deuxième dispositif d'émission et de réception,

   **caractérisé en ce que** l'agencement d'accès comprend en outre un dispositif de détermination de l'intensité d'émission (14) pour la détermination d'une valeur de l'intensité d'émission qui représente l'intensité actuelle du champ d'émission du premier signal radio émis par le premier dispositif d'émission et de réception, et **en ce que** la teneur en informations du premier signal radio comprend la valeur de l'intensité d'émission et l'agencement d'accès présente un dispositif de détermination de relation (23) pour la détermination d'une relation entre la valeur de l'intensité d'émission et la valeur de l'intensité de réception.

**2.** Agencement d'accès selon la revendication 1, **caractérisé en ce que** la teneur en informations du deuxième signal radio comprend la valeur de l'intensité de réception.

**3.** Agencement d'accès selon la revendication 1 ou 2, **caractérisé en ce que** la teneur en informations du deuxième signal radio comprend la relation entre la valeur de l'intensité d'émission et la valeur de l'intensité de réception.

**4.** Mécanisme d'accès selon l'une des revendications 1, 2 ou 3, **caractérisé par** un dispositif de détermination de distance (24), conçue pour la détermination d'une valeur de distance, qui caractérise une distance entre le premier dispositif d'émission et de réception (11, 11a, 12, 12a, 13, 13a) et le deuxième dispositif d'émission et de réception (21, 21a) sur la base de la relation, déterminée par le dispositif de détermination de la relation (23), entre la valeur de l'intensité d'émission et la valeur de l'intensité de réception.

**5.** Mécanisme d'accès selon l'une des revendications précédentes, **caractérisé en ce que** le deuxième dispositif d'émission et de réception (21, 21a) et le dispositif de détermination de relation (23) font partie intégrante d'un mécanisme mobile (20).

**6.** Mécanisme d'accès selon la revendication 1 ou 2, **caractérisé en ce que** le premier dispositif d'émission et de réception (11, 11a, 12, 12a, 13, 13a) et le dispositif de détermination de relation (23) font partie intégrante d'un mécanisme (10).

**7.** Mécanisme d'accès selon la revendication 5, **caractérisé en ce que** le deuxième dispositif d'émission et de réception (21, 21a), le dispositif de détermination de relation (23) et le dispositif de détermination de distance (24) font partie intégrante d'un mécanisme mobile (20) comprenant ces dispositifs.

**8.** Mécanisme d'accès selon la revendication 7, **caractérisé en ce que** la teneur en informations du deuxième signal radio comprend la valeur de distance.

**9.** Procédé de détermination d'une valeur de distance caractérisant la distance entre un premier dispositif d'émission et de réception (11, 11a, 12, 12a, 13, 13a) et un deuxième dispositif d'émission et de réception (21, 21a) d'un agencement d'accès pour un véhicule, avec les étapes suivantes :

- détermination d'une valeur de l'intensité d'émission (S0) corrélée à l'intensité actuelle du champ d'émission du premier dispositif d'émission et de réception,
- émission d'un premier signal radio (S1) à l'aide du premier dispositif d'émission et de réception, la teneur en informations du premier signal radio comprenant la valeur de l'intensité d'émission,
- réception du premier signal radio (S2) à l'aide du deuxième dispositif d'émission et de réception,
- détermination d'une valeur de l'intensité de réception corrélée à l'intensité de champ de réception (S3) du premier signal radio reçu au niveau du deuxième dispositif d'émission et de réception,
- détermination de la relation entre la valeur de l'intensité de réception et la valeur de l'intensité d'émission (S4) et
- formation de la valeur de distance (S5) sur la base de la relation déterminée entre la valeur de l'intensité de réception et la valeur de l'intensité d'émission.

**10.** Procédé selon la revendication 9, **caractérisé en ce que** la valeur de distance est formée de manière proportionnelle au quotient entre la valeur de l'intensité de réception et la valeur de l'intensité d'émission.

**11.** Procédé selon la revendication 9, **caractérisé en ce que** la valeur de distance prend une valeur proportionnelle à la distance entre un premier dispositif d'émission et de réception (11, 11a, 12, 12a, 13, 13a) et un deuxième dispositif d'émission et de réception (21, 21a).

**12.** Procédé selon la revendication 9, **caractérisé en ce que** la valeur de distance pend une valeur classifiant la distance entre un premier dispositif d'émission et de réception (11, 11a, 12, 12a, 13, 13a) et un deuxième dispositif d'émission et de réception (21, 21a).

FIG 1

100

## FIG 2

Bestimmen des
Sendestärkewerts — S0

Senden eines
Funksignals mit dem
Sendestärkewert — S1

Empfangen des
Funksignals — S2

Bestimmen des
Empfangsstärkewerts
des Funksignals — S3

Bestimmen der Relation
von Empfangs- und
Sendestärkewert — S4

Ermitteln des
Abstands- bzw.
Distanzwerts — S5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032936 A1